# EUROPÄISCHE PATENTSCHRIFT

(11) **EP 0 952 113 B1**
(45) Veröffentlichungstag und Bekanntmachung des Hinweises auf die Patenterteilung: **28.05.2003**
(21) Anmeldenummer: 99104960.2
(22) Anmeldetag: 12.03.1999
(51) Int. Cl.: C02F 1/24, C02F 9/00

(54) **Waschwasser-Aufbereitungsanlage**
Plant for the treatment of washing water
Installation pour le traitement d'eau de lavage

(30) Priorität: 25.04.1998 DE 29807564 U
(43) Veröffentlichungstag der Anmeldung: 27.10.1999
(73) Patentinhaber: AWAS Heinz Ihne, 57234 Wilnsdorf (DE)
(72) Erfinder: Ihne, Heinz, 57234 Wilnsdorf (DE)
(74) Vertreter: Selting, Günther, Dipl.-Ing.

(56) Entgegenhaltungen:
- EP-A- 0 829 305
- WO-A-91/01276
- DE-A- 4 038 605
- DE-A- 4 116 082
- PATENT ABSTRACTS OF JAPAN vol. 006, no. 122 (C-112), 7. Juli 1982 (1982-07-07) & JP 57 050562 A (GADELIUS KK), 25. März 1982 (1982-03-25)

## Beschreibung

Die Erfindung betrifft eine Waschwasser-Aufbereitungsanlage für einen ein Pumpspeicherbecken enthaltenden Waschwasserkreislauf.

Es ist bekannt, bei Autowaschanlagen, insbesondere bei Portalwaschanlagen, das Waschwasser in einem Kreislauf zu führen. Dabei wird das schmutzhaltige Wasser aufgefangen, einer Aufbereitungsanlage zugeführt und das gereinigte Wasser steht anschließend für ein weiteres Versprühen zur Verfügung. Das Schmutzwasser von Autowaschanlagen enthält eine Vielzahl von Verunreinigungen, u.a. Feststoffe, Wachs, Benzin, und Schmierstoffe, sowie biologische Substanzen.

Eine Waschwasser-Aufbereitungsanlage, von der der Oberbegriff des Patentanspruchs 1 ausgeht, ist beschrieben in WO 91/01276. Diese Aufbereitungsanlage weist einen Schmutzwasserbehälter und einen daran angeschlossenen Flotationsreaktor. Der Flotationsreaktor ist mit einer Injektionsvorrichtung zum Einführen des Schmutzwassers versehen und er enthält ein zentrales Rohr, das als Steigrohr ausgebildet ist und am oberen Ende eine Einlauföffnung für Reinwasser aufweist. Das in dem Vorlage-Zentralbehälter aufschwimmende Flotat gelangt in einen Flotatabzug und von dort zu einem Auslass.

DE-A-41 16082 beschreibt eine Waschwasser-Aufbereitungsanlage, die 2 Absetzbecken, einen Flotationsreaktor, einen Bioreaktor und einen Pumpenspeicher aufweist.

In JP-A-57 050 562 ist eine Vorrichtung zur Behandlung einer Papierpulpensuspension beschrieben, die einen Flotationsreaktor und ein darin angeordnetes Pumpspeicherbecken aufweist. Zum Abziehen von Luftblasen dienen seitliche Abzugsöffnungen an dem Flotationsreaktor. Das in dem Flotationsreaktor gereinigte Wasser gelangt aus dem Vorlage-Zentralbehälter in einen Ablauf.

Der Erfindung liegt die Aufgabe zugrunde, eine Waschwasser-Aufbereitungsanlage für einen Waschwasserkreislauf zu schaffen, die sich insbesondere für die Aufbereitung des Schmutzwassers von Autowaschanlagen eignet, mit geringen Kosten herstellbar ist und einen hohen Reinigungsgrad ermöglicht.

Die Lösung dieser Aufgabe erfolgt erfindungsgemäß mit den im Patentanspruch 1 angegebenen Merkmalen.

Die erfindungsgemäße Waschwasser-Aufbereitungsanlage enthält einen Flotationsreaktor, in den das Schmutzwasser zusammen mit Sauerstoff oder Luft durch eine Injektionsvorrichtung im unteren Bereich injiziert wird. Dabei wird die Luft feinblasig in das Wasser eingetragen, das durch die Injektion zugleich in eine kreisende Bewegung im Flotationsreaktor versetzt wird. Die durch die Injektion erzeugten Mikroblasen lagern sich an die im Wasser befindlichen Fest- und Schwebstoffe an. Dadurch werden die Festund Schwebstoffe an die Wasseroberfläche befördert, d.h. sie werden flotiert. Diese feinsten Luftbläschen haben ein so hohes Bindungspotential, daß keine Flockungsmittel benötigt werden. Weiterhin wird durch Erzeugung dieser feinsten Bläschen bei minimalen Energieaufwand das Wasser optimal belüftet, da durch die großen der Luft ausgesetzten Oberflächen ein maximaler Stoffaustausch geschaffen wird. Der für den biologischen Abbau nötige Primärstoff Sauerstoff wird dadurch in idealer Weise im gesamten Reaktorvolumen zur Verfügung gestellt. Durch den Sauerstoff erfolgt eine Unterdrückung von anaeroben Prozessen, während aerobe Prozesse gefördert werden. Die im Waschwasser enthaltenen Inhaltsstoffe werden teils oxydiert, biologisch abgebaut und/oder aufgeschwemmt, wobei die aufschwimmenden Anteile abgezogen werden.

Der Flotationsreaktor enthält einen oben offenen Vorlage-Zentralbehälter, der unten mit einem Ablauf für gereinigtes Brauchwasser versehen ist. Die Injektionsströmung umgibt den Vorlage-Zentralbehälter, der vorzugsweise kreisrunden Querschnitt hat, und zirkuliert um diesen herum. Wenn die Schmutzanteile in dem Flotationsreaktor die Höhe der oberen Öffnung des Vorlage-Zentralbehälters erreicht haben, sind sie bereits mit Luftbläschen so weit angereichert, daß sie durch Auftrieb weiter nach oben wandern. Das von Schmutzanteilen freie Wasser sinkt dagegen in Achsnähe des Reaktors herab und gelangt in den Vorlage-Zentralbehälter, aus dem es durch den bodenseitigen Ablauf abgezogen werden kann.

Gemäß der Erfindung ist zwischen dem Wasserverbraucher und dem Pumpspeicherbecken eine biologische Klär- und Absetzkammer vorgesehen und der Flotatabzug des Flotationsreaktors ist direkt oder über ein Filtersystem mit der Klär- und Absetzkammer verbunden. In der Klär- und Absetzkammer erfolgt eine Abtrennung von Leichtstoffen, wie Öl, Fett, Wachs oder Benzin bzw. ein Abtrennen von Feststoffen, jeweils durch Schwerkraftseparation. Ferner finden in der biologischen Klär- und Absetzkammer mikrobielle Zersetzungen von Fremdstoffen durch einen dort sich bildenden biologischen Rasen statt. Das so in mehrfacher Hinsicht gereinigte Wasser wird anschließend dem Pumpspeicherbecken zugeführt. Von hier aus wird das mit Mikroorganismen und Schwebepartikeln beladene Wasser über eine Druckpumpe in den Flotationsreaktor injiziert. Dadurch werden verschiedene Mikroben hyperaktiviert. Die dadurch anfallenden Schlämme steigen mit den Schwebepartikeln zur Wasseroberfläche auf. Von dort werden sie mit dem Flotatabzug abgezogen und in die biologische Klär- und Absetzkammer zurückgeführt. Die biologische Klär- und Absetzkammer enthält vorzugsweise ein Festkörperbett für das Mikrobenwachstum.

Der am oberen Ende des Flotationsreaktors angeordnete Flotatabzug kann eine horizontale Einlaßöffnung aufweisen, die mit einem eine Sogwirkung erzeugenden Siphon verbunden ist. Dadurch wird das Flotat in Schüben abgesogen und durch eine große Sogwirkung werden Verstopfungen der Abzugsleitung vermieden.

Die erfindungsgemäße Waschwasser-Aufbereitungsanlage erlaubt es, durch aufeinander abgestimmte technische Einrichtungen und Biotechnologien den Einsatz biologisch abbaubarer Reinigungsmittel optimal zu unterstützen.

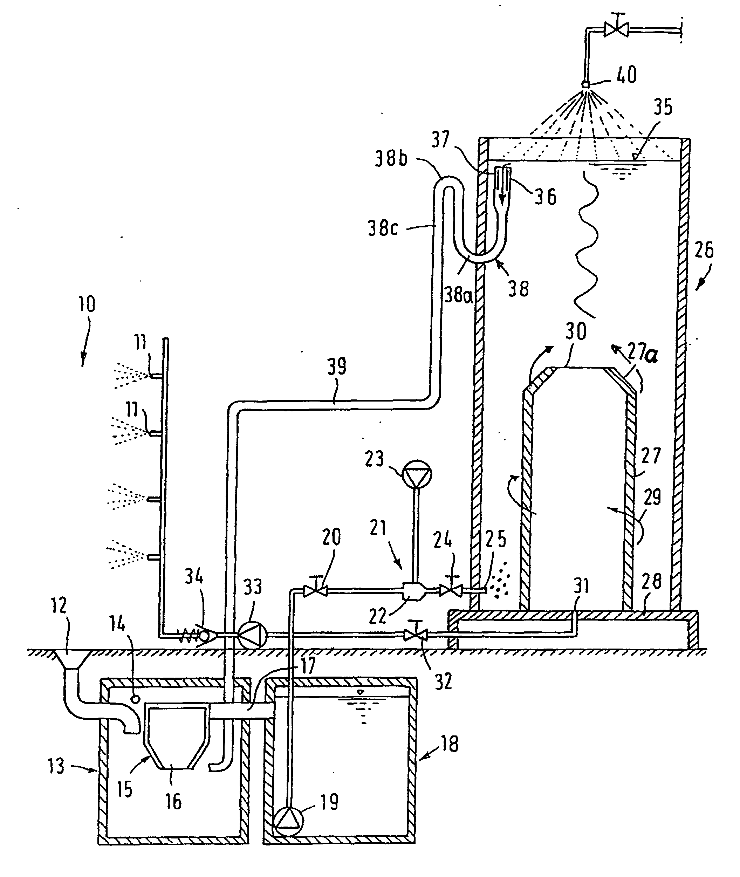

Im folgenden wird unter Bezug auf die einzige Figur der Zeichnung ein Ausführungsbeispiel der Erfindung näher erläutert.

In der Zeichnung ist die Waschwasser-Aufbereitungsanlage schematisch in Seitenansicht bzw. im Vertikalschnitt dargestellt.

Die Waschwasser-Aufbereitungsanlage dient zur Versorgung eines Verbrauchers 10, bei dem es sich hier um eine Autowaschanlage handelt. Das gereinigte Brauchwasser wird durch Düsen 11 versprüht und läuft anschließend durch einen Bodenablauf 12 ab. Der Bodenablauf 12 ist mit einer biologischen Klär- und Absetzkammer 13 verbunden, die zugleich als Ölseparator wirkt. Ein Öl-Wasser-Gemisch läuft durch eine obere Überlauföffnung 14 in einen (nicht dargestellten) Ölabscheider, wo das aufschwimmende Öl von dem Wasser getrennt wird.

Die biologische Klär- und Absetzkammer 13 enthält ferner eine Kammer 15, die nur an ihrem unteren Ende offen ist und deren Querschnitt sich im unteren Bereich nach unten verjüngt. In dieser Kammer 15, die in der Mitte der biologischen Klär- und Absetzkammer angeordnet ist, befindet sich ein Festbett 16 aus Granulat, Kunststoff-Füllkörper, Fasermaterial oder ähnlichen Substanzen, an denen sich Mikroben anlagern und einen biologischen Rasen bilden, der zum Abbau von organischen Inhaltsstoffen beiträgt. Das obere Ende der Kammer 15 ist über eine Leitung 17 mit dem Pumpspeicherbecken 18 verbunden. Das Pumpspeicherbecken dient zum Bereithalten des grobgereinigten Wassers. Es enthält eine Tauch-Pumpe 19 oder eine oberirdische Saug-Druckpumpe, deren Auslaß über ein Ventil 20 mit einer Injektionsvorrichtung 21 verbunden ist.

Die Injektionsvorrichtung 21 enthält eine Mischdüse 22, der einerseits das aus dem Pumpspeicherbecken 18 kommende Wasser mit Druck zugeführt wird und andererseits von der Pumpe 23 oder einem Druckkessel gelieferte Druckluft oder -Gas. Der Gasdruck ist höher als der Wasserdruck. Hinter der Mischdüse 22 ist ein weiteres Ventil 24 angeordnet, das zu einer Strömverteilungsdüse 25 führt.

Kernstück der Aufbereitungsanlage ist der Flotationsreaktor 26. Während die Klär- und Absetzkammer 13 und das Pumpspeicher 18 unterirdisch angeordnet sind, besteht der Flotationsreaktor 26 aus einem oberirdischen Rundbehälter von zylindrischer Bauform. Im Innern des Flotationsreaktors 26 befindet sich ein Vorlage-Zentralbehälter 27, der auf dem Reaktorboden 28 aufsteht und etwa bis zur halben Höhe des Flotationsreaktors 26 aufragt. Das obere Ende 27a des Vorlage-Zentralbehälters ist kegelstumpfförmig ausgebildet und nach oben offen. Der Durchmesser des Vorlage-Zentralbehälters 27 ist etwas größer als die Hälfte des Durchmessers des Flotationsreaktors.

Die Einströmverteilungsdüse 25 ist derart angeordnet, daß sie tangential in den Flotationsreaktor einmündet, *so* daß in dem den Zentalbehälter 27 umgebenden Ringraum eine den Vorlage-Zentralbehälter schraubenförmig umgebende Strömung 29 entsteht, die aus dem vorgereinigten Abwasser und darin enthaltenen feinblasigen Gas besteht. Die Einströmverteilungsdüse 25 ist nahe dem Reaktorboden 28 angeordnet. Wenn die Strömung 29 das obere Ende des Vorlage-Zentralbehälters 27 erreicht hat, ist das Wasservolumen mit feinblasig verteiltem Gas durchmischt, wobei das Gas hauptsächlich an Schmutzstoffen anhaftet und diese aufsteigen läßt. Durch die schraubenförmig aufsteigenden Feinstblasen wird andererseits das Reinwasser vor eindringenden Schmutzpartikeln in die obere Öffnung 30 des Vorlage-Zentralbehälters 27 geschützt. Die Wirbelströmung im Flotationsreaktor 26 sorgt einerseits für einen effektiven Stoffaustausch, in dem sie die Aktivierung, Belebung und die Selbstreinigungskräfte des Wassers unterstützt. Andererseits begünstigt sie den geregelten Flotatschlammaustrag.

Im Reaktorboden 28 befindet sich im Innern des Vorlage-Zentralbehälters 27 der Reinwasserablauf 31, der über ein Ventil 32 eine Pumpe 33 und ein Rückschlagventil 34 mit den Düsen 11 des Verbrauchers 10 verbunden ist. Bei Bedarf kann also dem Flotationsreaktor auch kontinuierlich Reinwasser entnommen werden.

Die aufsteigenden, mit Sauerstoff angereicherten Schmutzstoffe sammeln sich auf der Oberfläche 35 des im Reaktor 26 stehenden Wassers. Dort befindet sich ein Flotatabzug 36, dessen Einlauföffnung 37 horizontal angeordnet ist. Bei der Einlauföffnung 37 kann es sich auch um einen Einlauftrichter handeln. Sie kann ferner mit Leitblechen u.dgl. versehen sein.

An den Flotatabzug 36 schließt sich ein Siphon 38 aus einem U-förmig gebogenen Rohr 38a und einem anschließenden Siphonknie 38b mit Fallrohr 38c an. Von dem Siphon 38 führt eine Leitung 39 zurück in die Klär- und Absetzkammer 13. Dadurch wird ein Kreislaufsystem mit stark luftangereichertem Brauchwasser zur biologischen Klär- und Absetzkammer hin aufgebaut. Ferner ist es möglich, über einen Durchlauffilter Stoffe zurückzuhalten.

Am oberen Ende des Flotationsreaktors 26 befindet sich eine Entschäumungsdüse 40, die auf die Wasseroberfläche 35 gerichtet ist. Diese Entschäumungsdüse 40 ist eine Sprühdüse, die einerseits dazu dient, Schaum zu zerschlagen und zum anderen zur Frischwasser-Nachspeisung.

Die Injektionsvorrichtung 21 kann eine metallische katalytisch wirksame kreisregulierende und -reduzierende Beschichtung aufweisen. Ferner kann in der von dem Pumpspeicherbecken 18 zum Flotationsreaktor 26 führende Leitung eine UV-A-Bestrahlungseinheit vorgesehen sein, die aber auch in dem Festbettkörper integriert sein kann.

## Patentansprüche

1. Waschwasser-Aufbereitungsanlage mit einem ein Pumpspeicherbecken (18) enthaltenden Waschwasserkreislauf, einem Flotationsreaktor (26), einer Schmutzwasser aus dem Pumpspeicherbecken (18) mit Gas mischenden und in den unteren Bereich des Flotationsreaktor (26) einführenden Injektionsvorrichtung (21), einem unten im Flotationsreaktor (26) angeordneten, oben offenen und unten mit einem Ablauf (31) für gereinigtes Brauchwasser versehenen Vorlage-Zentralbehälter (27) und einem oben im Flotationsreaktor (26) angeordneten Flotatabzug (36),
**dadurch gekennzeichnet,**
**daß** zwischen einem Wasserverbraucher (10) und dem Pumpspeicherbecken (18) eine biologische Klär- und Absetzkammer (13) vorgesehen ist und der Flotatabzug (36) direkt oder über ein Filtersystem mit der Klär- und Absetzkammer (13) verbunden ist.

2. Waschwasser-Aufbereitungsanlage nach Anspruch 1, **dadurch gekennzeichnet, daß** eine UV-A-Bestrahlungseinheit vorgesehen ist, die entweder in einem Festbett (16) der Klärund Absatzkammer (13) oder in der vor dem Pumpspeicherbecken (18) zum Flotationsreaktor (26) führenden Leitung angebracht ist.

3. Waschwasser-Aufbereitungsanlage nach Anspruch 1 oder 2, **dadurch gekennzeichnet, daß** die biologische Klär- und Absetzkammer (13) ein Festkörperbett (16) für Mikroben enthält.

4. Waschwasser-Aufbereitungsanlage nach einem der Ansprüche 1-3, **dadurch gekennzeichnet, daß** der Flotatabzug (36) eine horizontale Einlauföffnung (37) aufweist, die mit einem eine Sogwirkung erzeugenden Siphon (38) verbunden ist.

5. Waschwasser-Aufbereitungsanlage nach einem der Ansprüche 1-4, **dadurch gekennzeichnet, daß** eine Entschäumungsdüse (40) auf die Oberfläche (35) der im Flotationsreaktor (26) befindlichen Flüssigkeit gerichtet ist.

6. Waschwasser-Aufbereitungsanlage nach einem der Ansprüche 1-5, **dadurch gekennzeichnet, daß** die Injektionsvorrichtung (21) eine metallische katalytisch wirksame kreisregulierende und -reduzierende Beschichtung aufweist.

7. Waschwasser-Aufbereitungsanlage nach einem der Ansprüche 1-6, **dadurch gekennzeichnet, daß** die Injektionsvorrichtung (21) einen höheren Gas- als Wasserdruck aufweist und tangential in den unteren Bereich des Flotationsreaktors (26) einmündet, wodurch eine um das Pumpspeicherbecken (27) rotierende aufsteigende 2-Phasen-Kreisströmung (29) entsteht.

## Claims

1. Washing-water treatment plant comprising: a washing-water circuit including a pump storage reservoir (18), a floatation reactor (26), an injection device (21) mixing sewage water from the pump storage reservoir (18) with gas and supplying said sewage water to the lower portion of the flotation reactor (26), a delivery central tank (27) arranged in the lower portion of the floatation reactor (26) and being open towards the top and provided in the lower portion with a discharge (31) for cleaned service water, and a floatation product outlet (36) arranged in the upper portion of the floatation reactor (26),
**characterized in that**
between a water consumer (10) and the pump storage reservoir (18) a biological clarification and settling chamber (13) is provided and the floatation product outlet (36) is connected directly or via a filter system with the clarification and settling chamber (13).

2. Washing-water treatment plant according to claim 1, **characterized in that** a UV-A irradiation unit is provided which is arranged either in a solid bed (16) of the clarification and settling chamber (13) or in the conduit extending from the pump storage reservoir (18) to the floatation reactor (26).

3. Washing-water treatment plant according to claim 1 or 2, **characterized in that** the biological clarification and settling chamber (13) comprises a solid bed (16) for microbes.

4. Washing-water treatment plant according to one of claims 1-3, **characterized in that** the floatation product outlet (36) comprises a horizontal inlet opening (37) connected with a siphon (38) which produces a suction effect.

5. Washing-water treatment plant according to one of claims 1-4, **characterized in that** a defoaming nozzle (40) is directed to the surface (35) of the liquid contained in the floatation reactor (26).

6. Washing-water treatment plant according to one of claims 1-5, **characterized in that** the injection device (21) comprises a metallic catalytically acting circulation-regulating and circulation-reducing coating.

7. Washing-water treatment plant according to one of claims 1-6, **characterized in that** the injection device (21) has a higher gas than water pressure and tangentially ends in the lower portion of the floatation reactor (26), whereby a rising two-phase circular current (29) rotating about the pump storage reservoir (27) is produced.

## Revendications

1. Installation pour le traitement d'eau de lavage comprenant un circuit d'eau de lavage contenant un bassin d'accumulation pour pompage (18), un réacteur de flottation (26), un dispositif d'injection (21) mélangeant l'eau sale sortant du bassin d'accumulation pour pompage (18) avec du gaz et l'introduisant dans la zone inférieure du réacteur de flottation (26), un réservoir central (27) agencé dans le bas du réacteur de flottation (26), ouvert vers le haut et doté dans le bas d'un écoulement (31) pour l'eau usée nettoyée et une évacuation de résidus de flottation (36) agencée dans le haut du réacteur de flottation (26),
**caractérisée**
**en ce qu'**une chambre de décantation et de sédimentation biologique (13) est prévue entre un consommateur d'eau (10) et le bassin d'accumulation pour pompage (18) et que l'évacuation de résidus de flottation (36) est reliée directement ou par un système de filtrage à la chambre de décantation et de sédimentation (13).

2. Installation pour le traitement d'eau de lavage selon la revendication 1, **caractérisée en ce qu'**une unité d'irradiation par UVA est prévue qui est installée soit dans un lit fixe (16) de la chambre de décantation et de sédimentation (13), soit dans la conduite menant au réacteur de flottation (26) en amont du bassin d'accumulation pour pompage (18).

3. Installation pour le traitement d'eau de lavage selon la revendication 1 ou 2, **caractérisée en ce que** la chambre de décantation et de sédimentation biologique (13) contient un lit fixe de matériau (16) pour des microbes.

4. Installation pour le traitement d'eau de lavage selon l'une des revendications 1 à 3, **caractérisée en ce que** l'évacuation de résidus de flottation (36) présente une ouverture d'admission horizontale (37) qui est reliée à un siphon (38) provoquant un effet de succion.

5. Installation pour le traitement d'eau de lavage selon l'une des revendications 1 à 4, **caractérisée en ce qu'**une buse anti-mousse (40) est orientée vers la surface (35) du liquide se trouvant dans le réacteur de flottation (26).

6. Installation pour le traitement d'eau de lavage selon l'une des revendications 1 à 5, **caractérisée en ce que** le dispositif d'injection (21) possède un revêtement métallique catalytique régulant et réduisant la circulation.

7. Installation pour le traitement d'eau de lavage selon l'une des revendications 1 à 6, **caractérisée en ce que** le dispositif d'injection (21) possède une pression de gaz supérieure à la pression d'eau et débouche tangentiellement dans la zone inférieure du réacteur de flottation (26), ce qui provoque un courant circulaire à deux phases (29) ascendant tournant autour du bassin d'accumulation pour pompage (27).
